# EUROPÄISCHE PATENTANMELDUNG

(11) **EP 3 101 796 A1**
(43) Veröffentlichungstag der Anmeldung: **07.12.2016**
(21) Anmeldenummer: 15170122.4
(22) Anmeldetag: 01.06.2015
(51) Int. Cl.: H02M 5/12, H02M 5/257, H02P 13/06

(54) **TRANSFORMATORSCHALTUNG ZUR ÄNDERUNG EINER SPANNUNG IN EINEM STROMNETZ GEGENÜBER EINER NENNSPANNUNG**

(71) Anmelder: AEG Power Solutions GmbH, 59581 Warstein-Belecke (DE)
(72) Erfinder: Maiberg, Paul, 59609 Anröchte (DE); Averberg, Andreas, 53115 Bonn (DE)
(74) Vertreter: Graefe, Jörg

(57) **Zusammenfassung**

Die Erfindung betrifft eine Transformatorschaltung zur Änderung einer sinusförmigen Spannung zwischen zwei Abschnitten (L11, L12) eines Außenleiters eines Stromnetzes
- mit einem ersten Transformator, der eine Primärwicklung (T11) und eine elektrisch zwischen einem ersten Abschnitt (L11) des Außenleiters und einem zweiten Abschnitt (L12) des Außenleiters angeordnete Sekundärwicklung (T12) aufweist,
- mit wenigstens einer Leitung (W1, W2, W4, W5, W7, W8) von wenigstens einem der Abschnitte (L1 1 , L12) des Außenleiters zur Primärwicklung (T11),
- mit wenigstens einer Leitung (W3, W6, W9) von der Primärwicklung (T11) zu einem Neutralleiter (N),
- mit wenigstens zwei Schaltern (S1 bis S9) mit zwei antiparallelen unidirektionalen steuerbaren Schaltelementen,
- wobei die Schalter (S1 bis S9) in wenigstens einer der Leitungen (W1, W2, W4, W5, W7, W8) von einem Abschnitt des Außenleiters (L1 1 , L12) zur Primärwicklung (T11) und/oder in wenigstens einer der Leitungen (W3, W6, W9) von der Primärwicklung (T11) zum Neutralleiter (N) eingesetzt sind,
- mit einer Steuerung (C) zum Schalten von Strompfaden,
- wobei mittels der Steuerung (C) wenigstens zwei Strompfade von einem der Abschnitte (L1 1 , L12) des Außenleiters, über die Primärspule (T11) oder zumindest einen Abschnitt der Primärspule (T11) zum Neutralleiter (N) schaltbar sind, was zu einem Strom in der Primärwicklung (T11) oder in einem Abschnitt der Primärspule (T11) führt, der eine Spannung in der Sekundärwicklung (T12) des ersten Transformators induziert, wodurch sich die Spannung zwischen den Abschnitten (L1 1 , L12) des Außenleiters ändert, und
- wobei mittels der Steuerung (C) durch Betätigen der Schalter (S1 bis S9) der Strom durch die Primärspule (T11) während aufeinanderfolgender Perioden der sinusförmigen Spannung zwischen zwei der Strompfade kommutierbar ist, um den Effektivwert der in der Sekundärwicklung (T12) induzierten Spannung zu verändern, wobei in einem magnetischen Kreis mit der Primärwicklung (T11) und der Sekundärwicklung (T12) eine zusätzliche Wicklung (T1Z) vorgesehen ist, die in einem Stromkreis eingeschaltet ist, der eine Reihenschaltung aus der zusätzlichen Wicklung (T1Z), einem zusätzlichen Schalter (SZ) mit zwei antiparallelen unidirektionalen steuerbaren Schaltelementen und einen ohmschem Widerstand (R) aufweist.

## Beschreibung

Die vorliegende Erfindung betrifft eine Transformatorschaltung zur Änderung einer sinusförmigen Spannung zwischen zwei Abschnitten eines Außenleiters eines Stromnetzes
- mit einem ersten Transformator, der eine Primärwicklung und eine elektrisch zwischen einem ersten Abschnitt des Außenleiters und einem zweiten Abschnitt des Außenleiters angeordnete Sekundärwicklung aufweist,
- mit wenigstens einer Leitung von wenigstens einem der Abschnitte des Außenleiters zur Primärwicklung,
- mit wenigstens einer Leitung von der Primärwicklung zum Neutralleiter,
- mit wenigstens zwei Schaltern mit zwei antiparallelen unidirektionalen steuerbaren Schaltelementen,
- wobei die Schalter in wenigstens einer der Leitungen von einem Abschnitt des Außenleiters zur Primärwicklung und/oder in wenigstens einer der Leitungen von der Primärwicklung zum Neutralleiter eingesetzt sind,
- mit einer Steuerung zum Schalten von Strompfaden,
- wobei mittels der Steuerung wenigstens zwei Strompfade von einem der Abschnitte des Außenleiters, über die Primärspule oder zumindest einen Abschnitt der Primärspule zum Neutralleiter schaltbar sind, was zu einem Strom in der Primärwicklung oder in einem Abschnitt der Primärspule führt, der eine Spannung in der Sekundärwicklung des ersten Transformators induziert, wodurch sich die Spannung zwischen den Abschnitten des Außenleiters ändert, und
- wobei mittels der Steuerung durch Betätigen der Schalter der Strom durch die Primärspule während aufeinanderfolgender Perioden der sinusförmigen Spannung zwischen zwei der Strompfade kommutierbar ist, um den Effektivwert der in der Sekundärwicklung induzierten Spannung zu verändern.

Eine derartige Transformatorschaltung ist aus dem Dokument DE 10 2012 108 363 A1 bekannt. Die Transformatorschaltung kann dazu benutzt werden, in einem Stromnetz die Spannung einzustellen, insbesondere in Niederspannungsnetzen. Die Regelbarkeit der Spannung in Niederspannungsnetzen ist in den vergangenen Jahren in den Blick von Fachleuten vor dem Hintergrund der starken Vermaschung der Stromnetze und der inzwischen großen Zahl von Kleinkraftwerken im Niederspannungsnetz gerückt. Insbesondere die Kleinkraftwerke, bei denen es sich in großem Maße um Fotovoltaikanlagen oder Windkraftanlagen handelt, die eine stark schwankende Leistung haben, machen eine Spannungsanpassung in den Niederspannungsnetzen erforderlich, damit jeder Punkt im Niederspannungsnetz mit einer Spannung versorgt werden kann, die innerhalb des durch Normen vorgesehenen Toleranzbandes liegt.

Die in dem Dokument DE 10 2012 108 363 A1 beschriebene Transformatorschaltung ermöglicht eine kontinuierliche Spannungsanpassung, d.h., dass anders als bei anderen Schaltungsanordnungen zur Anpassung der Spannung in Niederspannungsnetzen, die nur eine Einstellung der Spannung in diskreten Schritten erlauben, innerhalb eines Einstellbereichs jeder Effektivwert der Spannung eingestellt werden kann.

Ein Nachteil der in dem Dokument DE 10 2012 108 363 A1 beschriebenen Transformatorschaltung ist allerdings, dass eine kontinuierliche Spannungsanpassung nur bei einer Phase von größer als oder gleich Null zwischen Strom und Spannung, d.h. bei ohmscher oder ohmsch-induktiver Belastung möglich ist. Bei einer Phase zwischen Strom und Spannung kleiner Null ist eine kontinuierliche Einstellung der Spannung nicht möglich. Mit der Transformatorschaltung ist dann allerdings eine Einstellung auf diskrete Spannungen möglich.

Da in der Praxis ohmsch-induktive Belastungen die Regel und kapazitive Ströme eher die Ausnahme sind, hat dieser Nachteil der in dem Dokument DE 10 2012 108 363 A1 genannten Transformatorschaltung in der Praxis kaum eine Auswirkung. Im Einzelfall kann das aber durchaus anders sein.

Der Erfindung lag daher das Problem zu Grunde, eine Transformatorschaltung so weiter zu entwickeln, dass sie auch für kapazitive Ströme geeignet ist.

Diese Aufgabe wird dadurch gelöst, dass in einem magnetischen Kreis mit der Primärwicklung und der Sekundärwicklung eine zusätzliche Wicklung vorgesehen ist, die in einem Stromkreis eingeschaltet ist, der eine Reihenschaltung aus der zusätzlichen Wicklung, einem zusätzlichen Schalter mit zwei antiparallelen unidirektionalen steuerbaren Schaltelementen und einen ohmschen Widerstand aufweist.

Eine Untersuchung an der aus dem Dokument DE 10 2012 108 363 A1 bekannten Transformatorschaltung hat gezeigt, dass bei einem kapazitiven Strom durch den Außenleiter eine Kommutierung des Stroms durch die Primärwicklung nicht möglich ist, ohne dass es zu einem Kurzschluss zwischen dem Außenleiter und dem Neutralleiter kommt. Der Kurzschluss kann nur vermieden werden, wenn bei einer Übergabe des Stroms durch die Primärwicklung von einem ersten Strompfad auf einen zweiten Strompfad während einer halben Periode die Primärwicklung kurzzeitig in keinen Stromkreis, also auch in keinen der Strompfade eingebunden ist. Ist die Primärwicklung in keinen Stromkreis eingebunden, kann kein Strom durch die Primärwicklung fließen.

Wie ein durch die Primärwicklung fließender Strom, erzeugt bei dem Transformator auch ein durch die Sekundärwicklung fließender Strom, nämlich der Außenleiterstrom, in dem Transformator ein Magnetfeld, dessen stetige Änderung einen Strom in der Primärwicklung induziert. Ist die Primärwicklung dann aber nicht mehr über einen der Strompfade in einen Stromkreis eingebunden, führt das zu einer sprunghaften Änderung des magnetischen Flusses in dem Transformator. Die sprunghafte Änderung des magnetischen Flusses hat dann die Induktion einer hohen Spannung zur Folge, die es ebenso zu vermeiden gilt wie den Kurzschluss zwischen dem Außenleiter und dem Neutralleiter.

Durch die zusätzliche Wicklung, die in dem magnetischen Kreis mit der Primärwicklung und der Sekundärwicklung angeordnet ist, und der Möglichkeit durch ein Schließen des zusätzlichen Schalters einen Stromkreis zu schließen, in den die zusätzliche Wicklung eingebunden ist, besteht nun die Möglichkeit, den magnetischen Fluss in dem magnetischen Kreis aufrecht zu erhalten, auch wenn die Primärwicklung nicht mehr dazu beitragen kann.

Eine erfindungsgemäße Transformatorschaltung kann eine Vielzahl von Leitungen und Schaltern aufweisen, die es ermöglichen, Strompfade zu schalten, in die die Primärwicklung eingebunden ist, um durch eine Kommutierung der Strompfade Ströme in der Primärwicklung zu erhalten, die unterschiedliche Spannungen in der Sekundärwicklung zu erzeugen. Die erzeugten Spannungen können sich in ihren Effektivwerten und Richtungen unterscheiden. Durch die Kommutierung des Stroms von einem Strompfad zum anderen innerhalb einer halben Periode ist eine kontinuierliche Änderung des Effektivwertes der durch den Strom in der Primärwicklung in der Sekundärwicklung erzeugten Spannung möglich.

Eine erfindungsgemäße Transformatorschaltung kann insbesondere
- als eine der Leitungen eine erste Leitung von dem ersten Abschnitt des Außenleiters zu einem ersten Anschluss der Primärwicklung und/oder
- als eine der Leitungen eine zweite Leitung von dem zweiten Abschnitt des Außenleiters zu dem ersten Anschluss der Primärwicklung und/oder
- als eine der Leitungen eine dritte Leitung von dem ersten Anschluss der Primärwicklung zum Neutralleiter, und/oder
- als eine der Leitungen eine vierte Leitung von dem ersten Abschnitt des Außenleiters zu einem zweiten Anschluss der Primärwicklung und/oder
- als eine der Leitungen eine fünfte Leitung von dem zweiten Abschnitt des Außenleiters zu dem zweiten Anschluss der Primärwicklung und/oder
- als eine der Leitungen eine sechste Leitung von dem zweiten Anschluss der Primärwicklung zum Neutralleiter,
- als eine der Leitungen eine siebte Leitung von dem ersten Abschnitt des Außenleiters zu einer Anzapfung der Primärwicklung und/oder
- als eine der Leitungen eine achte Leitung von dem zweiten Abschnitt des Außenleiters zu der Anzapfung der Primärwicklung und/oder
- als eine der Leitungen eine neunte Leitung von der

Anzapfung der Primärwicklung zum Neutralleiter aufweisen.

Eine erfindungsgemäße Transformatorschaltung kann ferner
- als einen der Schalter einen ersten Schalter in der ersten Leitung und/oder
- als einen der Schalter einen zweiten Schalter in der zweiten Leitung und/oder
- als einen der Schalter einen dritten Schalter in der dritten Leitung und/oder
- als einen der Schalter einen vierten Schalter in der vierten Leitung und/oder
- als einen der Schalter einen fünften Schalter in der fünften Leitung und/oder
- als einen der Schalter einen sechsten Schalter in der sechsten Leitung und/oder
- als einen der Schalter einen siebten Schalter in der siebten Leitung und/oder
- als einen der Schalter einen achten Schalter in der achten Leitung und/oder
- als einen der Schalter einen neunten Schalter in der neunten Leitung
aufweisen.

Eine Primärwicklung einer erfindungsgemäßen Transformatorschaltung kann neben der bereits genannten Anzapfung eine oder mehrere weitere Anzapfungen aufweisen, die wie die bereits genannte Anzapfung über Leitungen mit dem ersten Abschnitt des Außenleiters, dem zweiten Abschnitt des Außenleiters und/oder dem Neutralleiter verbunden sind. In diesen weiteren Leitungen können weitere Schalter mit zwei antiparallelen unidirektionalen steuerbaren Schaltelementen vorgesehen sein.

Eine erfindungsgemäße Transformatorschaltung kann vorteilhaft ein Mittel zur Erfassung einer Phasenverschiebung zwischen der Spannung zwischen dem ersten oder zweiten Abschnitt des Außenleiters und dem Neutralleiter und dem Strom im Außenleiter aufweisen. Mit dem Mittel zur Erfassung der Phasenverschiebung kann vorteilhaft ein kapazitiver Strom im Außenleiter von einem induktiven oder einem ohmschen Strom im Außenleiter unterscheidbar sein. Vorteilhaft wird diese Information der Steuerung übermittelt. Gemäß der Erfindung kann mittels des Mittels zur Erfassung der Phasenverschiebung die Phasenverschiebung nicht nur qualitativ, sondern auch quantitativ festgestellt werden und an die Steuerung übermittelt werden. Eine qualitative Ermittlung in diesem Sinne ist lediglich die Feststellung, dass eine positive oder negative Phasenverschiebung vorliegt, während bei einer quantitativen Ermittlung auch der Betrag der Phasenverschiebung ermittelt wird.

Bei einer erfindungsgemäßen Transformatorschaltung kann die Steuerung so eingerichtet und/oder programmiert sein, dass bei einem kapazitiven Strom im Außenleiter kurz vor einem Nulldurchgang des Stroms im mittels der Steuerung geschalteten Strompfad, der den Strom mit der nächstfolgenden Kommutierung abgibt, der zusätzliche Schalter zum Einschalten angesteuert wird. Durch das Schließen des zusätzlichen Schalters wird der Stromkreis geschlossen, in dem die zusätzliche Wicklung eingebunden ist. Dadurch wird erreicht, dass der magnetische Fluss ohne wesentliche Änderung erhalten bleibt, wenn der bislang geschaltete Strompfad zum Zweck der Kommutierung unterbrochen wird und die Primärwicklung nicht mehr zum Erhalt des magnetischen Flusses beitragen kann.

Durch den Stromfluss, durch die zusätzliche Wicklung, den zusätzlichen Schalter und insbesondere dem dazu in Reihe geschalteten Widerstand entsteht eine Verlustleistung, die möglichst klein gehalten werden soll. Insbesondere deshalb kann bei einer erfindungsgemäßen Transformatorschaltung mittels der Steuerung bei einem kapazitiven Strom im Außenleiter kurz nach oder zusammen mit der Übernahme des Stroms durch einen Strompfad, also nach Abschluss der Kommutierung, der zusätzliche Schalter zum Ausschalten angesteuert werden.

Eine erste vorteilhafte erfindungsgemäße Transformatorschaltung kann die erste Leitung, den ersten Schalter, die dritte Leitung, den dritten Schalter und die sechste Leitung umfassen. Mit einer solchen Transformatorschaltung ist es möglich, eine positive Spannung in der Sekundärwicklung zu erzeugen, wenn der erste Schalter geschlossen und der dritte Schalter geöffnet ist. Ist dagegen der erste Schalter geöffnet und der dritte Schalter geschlossen, ist die Primärwicklung kurzgeschlossen und in der Sekundärwicklung wird keine Spannung induziert.

Ebenso ist es möglich, dass eine zweite vorteilhafte Transformatorschaltung die erste Leitung, den ersten Schalter, die siebte Leitung, den siebten Schalter und die sechste Leitung umfasst. Mit einer solchen Transformatorschaltung ist es möglich, positive Spannungen unterschiedlicher Größen in der Sekundärwicklung zu erzeugen, wenn der erste oder siebte Schalter geschlossen und der dritte Schalter geöffnet ist.

Eine dritte vorteilhafte erfindungsgemäße Transformatorschaltung kann die erste Leitung, den ersten Schalter, die dritte Leitung, den dritten Schalter, die sechste Leitung, die siebte Leitung und den siebten Schalter umfassen. Mit einer solchen Transformatorschaltung ist es möglich, positive Spannung unterschiedlicher Größen in der Sekundärwicklung zu erzeugen, wenn der erste oder siebte Schalter geschlossen und der dritte Schalter geöffnet ist. Ist dagegen der erste und der siebte Schalter geöffnet und der dritte Schalter geschlossen, ist die Primärwicklung kurzgeschlossen und in der Sekundärwicklung wird keine Spannung induziert.

Die erste, die zweite oder die dritte erfindungsgemäße Transformatorschaltung kann zusätzlich die vierte Leitung, den vierten Schalter und den sechsten Schalter umfassen. Ist dann der vierte Schalter und der dritte Schalter geschlossen und der erste Schalter, der sechste Schalter, ggf. der siebte Schalter geöffnet, ist es möglich, eine negative Spannung in der Sekundärwicklung zu erzeugen. Das gelingt auch, wenn der siebte Schalter und der dritte Schalter geschlossen und der erste Schalter, der sechste Schalter und der vierte Schalter geöffnet sind. Ist dagegen der erste, der vierte und der siebte Schalter geöffnet und der dritte und der sechste Schalter geschlossen, ist die Primärwicklung kurzgeschlossen und in der Sekundärwicklung wird keine Spannung induziert.

Eine erfindungsgemäße Transformatorschaltung kann so eingerichtet sein,
- dass mittels der Steuerung zur Ansteuerung der antiparallelen unidirektionalen steuerbaren Schaltelemente des zusätzlichen Schalters zwei Steuerungssignale erzeugt werden können, die ein erstes Muster und ein zweites Muster haben können, wobei das zweite Muster invers zum ersten Muster ist,
- dass bei einer Phasenverschiebung zwischen der Spannung zwischen dem ersten oder zweiten Abschnitt des Außenleiters und dem Neutralleiter und dem Strom im Außenleiter zwischen -90° und 0°, also einem Wirkfaktor cos ϕ zwischen 0 und 1, einerseits ein Signal mit dem ersten Muster ein erstes der beiden Schaltelemente steuert und ein Signal mit dem zweiten Muster ein zweites der beiden Schaltelemente steuert, wenn der bidirektionale Schalter geschlossen ist, und
- dass bei einer Phasenverschiebung zwischen -90° und-180°, also einem Wirkfaktor cos ϕ zwischen -1 und 0, andererseits die Muster der am ersten und am zweiten Schaltelement anliegenden Signale vertauscht sind, wenn der bidirektionale Schalter geschlossen ist.

In einem Bereich der Phasenverschiebung von -90° und 0°, also einem Wirkfaktor cos ϕ zwischen 0 und 1, wird dann eine Wirkleistung in der Richtung vom ersten Außenleiterabschnitt zum zweiten Außenleiterabschnitt übertragen. In einem Bereich der Phasenverschiebung zwischen -90° und -180°, also einem Wirkfaktor cos ϕ zwischen -1 und 0, wird dann eine Wirkleistung vom zweiten Außenleiterabschnitt zum ersten Außenleiterabschnitt übertragen.

Eine erfindungsgemäße Transformatorschaltung kann so betrieben werden, dass die Steuerung bei einem kapazitiven Strom im Außenleiter kurz vor einem Nulldurchgang eines mittels der Steuerung geschalteten und mit der nächsten Kommutierung den Strom abgebenden Strompfads der zusätzliche Schalter zum Einschalten angesteuert wird, so dass der magnetische Fluss im magnetischen Kreis aus der Primärwicklung, der Sekundärwicklung und der zusätzlichen Wicklung ohne sprunghafte Änderung bleibt.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: eine erfindungsgemäße Transformatorschaltung in einer allgemeinen Darstellung,
- Fig. 2: eine erfindungsgemäße Transformatorschaltung in einer vorteilhaften Ausführung,

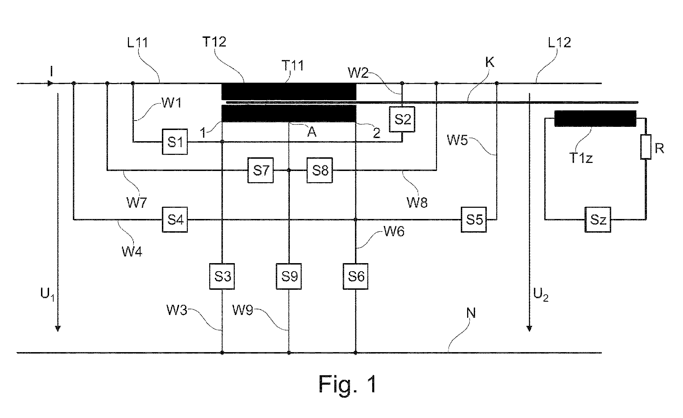

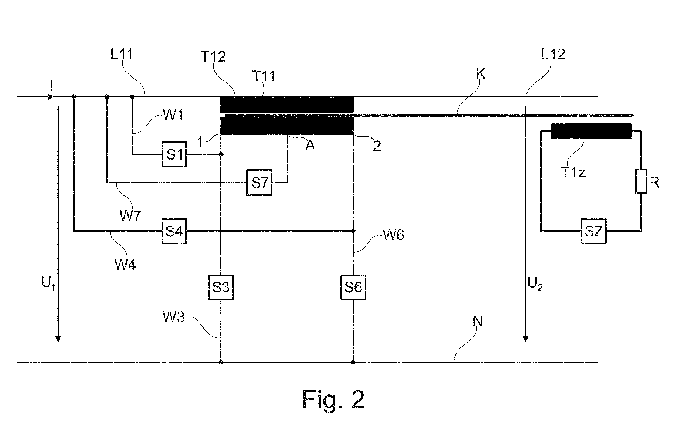

Die in der Fig. 1 dargestellte Transformatorschaltung stellt einen allgemeinen Fall dar, der in der Praxis wahrscheinlich nicht ausgeführt wird, der aber viele Schaltungsvarianten der Transformatorschaltung einschließt. Die Transformatorschaltung nach Fig. 2 ist eine Vereinfachung der Schaltung nach Fig. 1, deren Ausführung dem Fachmann nahezu alle Möglichkeiten der Schaltung nach Fig. 1 gibt.

Die Schaltung nach Fig. 1 bildet ein Netzwerk mit einem ersten Einund Ausgang, an dem eine Spannung U1 abfällt, und einem zweiten Ein- und Ausgang, an dem eine Spannung U2 abfällt. Der erste Einund Ausgang und der zweite Ein- und Ausgang sind über einen Außenleiter L11, L12 und einen Neutralleiter N miteinander verbunden.

Die Schaltung nach Fig. 1 weist einen Transformator auf, der eine Primärwicklung T11, eine Sekundärwicklung T12 und eine zusätzliche Wicklung T1Z auf, die auf einem Kern K angeordnet sind. Dadurch sind die Wicklungen T11, T12, T1Z in einem magnetischen Kreis angeordnet.

Die Primärwicklung T11 ist in einem Netzwerk mit Leitungen W1 bis W9 und Schaltern S1 bis S9 zwischen den Abschnitten L11, L12 des Außenleiters und dem Neutralleiter N eingebunden. Die Primärwicklung hat einen ersten Anschluss 1 und einen zweiten Anschluss 2, beide jeweils an einem Ende der Primärwicklung T11. Außerdem ist eine Anzapfung A in der Mitte der Primärwicklung T11 vorgesehen.

Es ist denkbar, dass die Primärwicklung T11 weitere Anzapfungen hat und/oder dass die Anzapfung A nicht in der Mitte der Primärwicklung T11 vorgesehen ist.

Eine erste Leitung W1 verbindet über einen ersten Schalter S1 den ersten Abschnitt L11 des Außenleiters mit dem ersten Anschluss 1 der Primärwicklung T11. Eine zweite Leitung W2 verbindet über einen zweiten Schalter S2 den zweiten Abschnitt L12 des Außenleiters mit dem ersten Anschluss 1 der Primärwicklung T11 und eine dritte Leitung W3 verbindet über einen dritten Schalter S3 den ersten Anschluss 1 der Primärwicklung T11 mit dem Neutralleiter N.

Eine vierte Leitung W4 verbindet über einen vierten Schalter S4 den ersten Abschnitt L11 des Außenleiters mit dem zweiten Anschluss 2 der Primärwicklung T11. Eine fünfte Leitung W5 verbindet über einen fünften Schalter S5 den zweiten Abschnitt L12 des Außenleiters mit dem zweiten Anschluss 2 der Primärwicklung T11 und eine sechste Leitung W6 verbindet über einen sechsten Schalter S6 den zweiten Anschluss 2 der Primärwicklung T11 mit dem Neutralleiter N.

Eine siebte Leitung W7 verbindet über einen siebten Schalter S7 den ersten Abschnitt L11 des Außenleiters mit der Anzapfung A der Primärwicklung T11. Eine achte Leitung W8 verbindet über einen achten Schalter S8 den zweiten Abschnitt L12 des Außenleiters mit der Anzapfung A der Primärwicklung T11 und eine neunte Leitung W9 verbindet über einen neunten Schalter S9 die Anzapfung A der Primärwicklung T11 mit dem Neutralleiter N.

So wie die siebte Leitung W7, die achte Leitung W8 und die neunte Leitung W9 die Anzapfung über die Schalter S7, S8, S9 mit den Außenleiterabschnitten L11, L11 und dem Neutralleiter N verbinden, können ggf. auch weitere Anzapfungen der Primärwicklung T11 mit den Außenleiterabschnitten L11, L11 und dem Neutralleiter N verbunden sein.

Die Schalter S1 bis S9 sind bidirektionale Schalter, die vorzugsweise aus antiparallel angeordneten Thyristoren aufgebaut sein können.

Die Sekundärwicklung T12 des Transformators ist zwischen den zwei Abschnitte L11, L 12 des Außenleiters angeordnet, der den ersten und den zweiten Ein- und Ausgang miteinander verbindet. Die zusätzliche Wicklung T1Z ist mit einem zusätzlichem Schalter SZ und einem Widerstand R in einem Stromkreis angeordnet.

Mittels der Schalter S1 bis S9 kann die Primärwicklung T11 oder ein Abschnitt der Primärwicklung T11 in unterschiedliche Strompfade zwischen dem ersten Abschnitt L11 des Außenleiters und dem Neutralleiter N oder dem zweiten Abschnitt L12 des Außenleiters und dem Neutralleiter N gebracht werden. Je nach dem welcher Strompfad geschaltet wird, wird an die Primärwicklung T11 eine Spannung in Richtung vom ersten Anschluss 1 zum zweiten Anschluss 2 oder umgekehrt, von der Anzapfung A zum zweiten Anschluss 2 oder umgekehrt oder von der Anzapfung A zum ersten Anschluss 1 oder umgekehrt angelegt, was zu einer Induktion einer Spannung in der Sekundärwicklung T12 führt. Die in der Sekundärwicklung T12 induzierte Spannung hat dabei einen Betrag und eine Richtung, die von dem geschalteten Strompfad abhängt. Zwischen den Abschnitten L11, L12 des Außenleiters können so unterschiedliche Spannungen eingestellt werden.

Die Primärwicklung T11 kann ebenso mittels der Schalter S1 bis S9 kurzgeschlossen werden, so dass in der Sekundärwicklung T12 keine Spannung induziert wird. Der erste Abschnitt L11 und der zweite Abschnitt L12 liegen dann auf einem gleichen Potential. Zum Kurzschließen werden die Schalter S1, S2, S4, S5, S7, S8 geöffnet und die Schalter S3, S6 geschlossen. Auch der Schalter S9 kann geschlossen sein.

Durch ein Schließen der Schalter S1 und S6 bei gleichzeitig geöffneten Schaltern S2 bis S5 und S7 bis S9 wird die Primärwicklung in Richtung vom ersten Anschluss 1 zum zweiten Anschluss 2 von einem Strom durchflossen, der vom ersten Abschnitt L11 zum Neutralleiter N fließt. In gleicher Richtung kann durch die Primärwicklung ein Strom vom zweiten Abschnitt L12 zum Neutralleiter N fließen, wenn der zweite Schalter S2 und der sechste Schalter S6 geschlossen und alle übrigen Schalter S1, S3 bis S5, S7 bis S9 geöffnet sind.

Ein Strom kann durch den Abschnitt der Primärwicklung T11 zwischen dem ersten Anschluss und der Anzapfung A fließen, wenn der erste Schalter S1 und der neunte Schalter S9 geschlossen sind, während alle übrigen Schalter geöffnet sind.

Von dem zweiten Anschluss 2 kann über die Primärwicklung T11 ein Strom zum ersten Anschluss 1 fließen, wenn der vierte Schalter S4 oder der fünfte Schalter S5 und der dritte Schalter S3 geschlossen und alle anderen Schalter geöffnet sind.

Um die Primärwicklung spannungsfrei zu schalten werden alle Schalter bis auf den dritten Schalter S3 und den sechsten Schalter S6 geschlossen. Ein zusätzliches Schließen des neunten Schalters S9 ist dabei unschädlich.

Wie ein Fachmann bei genauerer Betrachtung feststellen wird, kann die Primärwicklung T11 und jeder Abschnitt der Primärwicklung T11 allein durch den ersten Schalter S1, den dritten Schalter S3, den vierten Schalter S4, den sechsten Schalter S6 und den siebten Schalter S7 in jeder Richtung von einem Strom vom ersten Abschnitt L11 des Außenleiters zum Neutralleiter N durchflossen werden. Dabei fällt die Spannung zwischen dem ersten Abschnitt L11 und dem Neutralleiter N an der gesamten Primärwicklung T11 in der einen oder der anderen Richtung oder an nur einem der beiden Abschnitte der Primärwicklung T11 in der einen oder anderen Richtung ab. Das führt zur Induktion von Spannungen unterschiedlicher Größe und Richtung in der Sekundärwicklung T12. Die Leitungen W2, W5, W8 und W9 sowie die Schalter S2, S5, S8, S9 sind damit nicht notwendig, um in der Sekundärwicklung T12 Spannungen unterschiedlicher Richtung und Größe zu induzieren. Diese Leitungen und Schalter sind daher in der Schaltung gemäß der Fig. 2 auch entfallen.

Mit den Transformatorschaltungen gemäß den Fig. 1 und 2 ist eine kontinuierliche Spannungsanpassung möglich, in dem die Schalter mit einer Phasenanschnittsteuerung und vorteilhaft in Spannungsfolgesteuerung betrieben werden. D.h., dass innerhalb eines Einstellbereichs jeder Effektivwert der Spannung eingestellt werden kann. Das funktioniert bei einer Phase zwischen Strom und Spannung von größer als oder gleich Null, d.h. bei ohmscher oder ohmsch-induktiver Belastung so wie es aus dem Dokument DE 10 2012 108 363 A1 bekannt ist.

Um einen Betrieb bei einer Phase zwischen Strom und Spannung kleiner Null eine kontinuierliche Einstellung der Spannung möglich zu machen, wird die zusätzliche Wicklung T1Z des Transformators, der zusätzliche Schalter und der Widerstand R benötigt.

Die zusätzliche Wicklung T1Z ist in einem magnetischen Kreis mit der Primärwicklung T11 und der Sekundärwicklung T12.

Durch die zusätzliche Wicklung T1Z, die in dem magnetischen Kreis mit der Primärwicklung T11 und der Sekundärwicklung T12 angeordnet ist, und die Möglichkeit, durch ein Schließen des zusätzlichen Schalters SZ einen Stromkreis zu schließen, in den die zusätzliche Wicklung T1Z eingebunden ist, besteht nun die Möglichkeit, den magnetischen Fluss in dem magnetischen Kreis aufrecht zu erhalten, auch wenn die Primärwicklung T11 nicht mehr dazu beitragen kann.

Der zusätzliche Schalter SZ muss, damit der magnetische Fluss aufrechterhalten werden kann, in der Zeit zwischen dem Nulldurchgang des Stroms und dem Nulldurchgang der Spannung geschlossen sein. Damit sichergestellt ist, dass der zusätzliche Schalter SZ in diesem Zeitraum geschlossen ist, wird der Schalter vorzugsweise kurz vor dem Nulldurchgang des Stroms geschlossen und kurz nach dem Nulldurchgang der Spannung geschlossen. Damit die in dem Stromkreis mit der zusätzlichen Wicklung T1Z nicht durch den Widerstand R unnötig elektrische Energie in Wärme umgewandelt wird, sollen die Schalter SZ möglichst wenig außerhalb des Zeitraums geschlossen sein, in dem das notwendig ist, um den magnetischen Fluss aufrecht zu erhalten.

In dem Dokument DE 10 2012 108 363 A1 ist der Fall beschrieben, dass Energie vom ersten Abschnitt L11 des Außenleiters zum zweiten Abschnitt L12 des Außenleiters transportiert wird, also die Seite des ersten Abschnitts L11 eine Leistung liefert und die Seite des zweiten Abschnitts L12 diese aufnimmt. Das kann auch von der erfindungsgemäßen Transformatorschaltung so geleistet werden. Der Wirkfaktor cos ϕ ist dann zwischen 0 und 1. Je nach Richtung der Spannung, die in der Sekundärwicklung T12 induziert wird, kann dabei die Spannung zwischen dem ersten Abschnitt L11 des Außenleiters und dem Neutralleiter N größer oder kleiner als die Spannung zwischen dem zweiten Abschnitt L12 des Außenleiters und dem Neutralleiter N sein.

Mit der erfindungsgemäßen Transformatorschaltung ist es nun auch möglich, elektrische Energie von der Seite des zweiten Abschnitts L12 auf die Seite des ersten Abschnitts L11 des Außenleiters zu transportieren. Von der Seite des zweiten Abschnitts L12 des Außenleiters wird dann Leistung geliefert, die von der Seite des ersten Außenleiterabschnitts L11 aufgenommen wird. Der Wirkfaktor cos ϕ ist dann zwischen -1 und 0. Auch das kann bei einem Heraufsetzen oder einem Herabsetzen der Spannung durch die Sekundärwicklung T12 des Transformators erfolgen.

Je nach Richtung des Energietransportes unterscheidet sich bei Beibehaltung des Bezugssystems die Richtung des Stroms im Außenleiter. Es ist daher einfach zu verstehen, dass bei einer geänderten Stromrichtung die Ansteuerung der einzelnen Thyristoren des zusätzlichen Schalters vertauscht erfolgen muss, um den in der zusätzlichen Wicklung T1Z induzierten Strom in dem Stromkreis über den Widerstand R einen Weg zu bieten, so dass der magnetische Fluss auch in diesem Betriebsfall erhalten bleibt.

## Patentansprüche

1. Transformatorschaltung zur Änderung einer sinusförmigen Spannung zwischen zwei Abschnitten (L1 1 , L12) eines Außenleiters eines Stromnetzes
- mit einem ersten Transformator, der eine Primärwicklung (T11) und eine elektrisch zwischen einem ersten Abschnitt (L11) des Außenleiters und einem zweiten Abschnitt (L12) des Außenleiters angeordnete Sekundärwicklung (T12) aufweist,
- mit wenigstens einer Leitung (W1, W2, W4, W5, W7, W8) von wenigstens einem der Abschnitte (L11, L1 2) des Außenleiters zur Primärwicklung (T11),
- mit wenigstens einer Leitung (W3, W6, W9) von der Primärwicklung (T11) zu einem Neutralleiter (N),
- mit wenigstens zwei Schaltern (S1 bis S9) mit zwei antiparallelen unidirektionalen steuerbaren Schaltelementen,
- wobei die Schalter (S1 bis S9) in wenigstens einer der Leitungen (W1, W2, W4, W5, W7, W8) von einem Abschnitt des Außenleiters (L11, L12) zur Primärwicklung (T11) und/oder in wenigstens einer der Leitungen (W3, W6, W9) von der Primärwicklung (T11) zum Neutralleiter (N) eingesetzt sind,
- mit einer Steuerung (C) zum Schalten von Strompfaden,
- wobei mittels der Steuerung (C) wenigstens zwei Strompfade von einem der Abschnitte (L11, L1 2) des Außenleiters, über die Primärspule (T11) oder zumindest einen Abschnitt der Primärspule (T11) zum Neutralleiter (N) schaltbar sind, was zu einem Strom in der Primärwicklung (T11) oder in einem Abschnitt der Primärspule (T11) führt, der eine Spannung in der Sekundärwicklung (T12) des ersten Transformators induziert, wodurch sich die Spannung zwischen den Abschnitten (L11, L12) des Außenleiters ändert, und
- wobei mittels der Steuerung (C) durch Betätigen der Schalter (S1 bis S9) der Strom durch die Primärspule (T11) während aufeinanderfolgender Perioden der sinusförmigen Spannung zwischen zwei der Strompfade kommutierbar ist, um den Effektivwert der in der Sekundärwicklung (T12) induzierten Spannung zu verändern,
**dadurch gekennzeichnet, dass**
- in einem magnetischen Kreis mit der Primärwicklung (T11) und der Sekundärwicklung (T12) eine zusätzliche Wicklung (T1Z) vorgesehen ist, die in einem Stromkreis eingeschaltet ist, der eine Reihenschaltung aus der zusätzlichen Wicklung (T1Z), einem zusätzlichen Schalter (SZ) mit zwei antiparallelen unidirektionalen steuerbaren Schaltelementen und einen ohmschem Widerstand (R) aufweist.

2. Transformatorschaltung nach Anspruch 1, **dadurch gekennzeichnet, dass** die Transformatorschaltung
- als eine der Leitungen eine erste Leitung (W1) von dem ersten Abschnitt (L11) des Außenleiters zu einem ersten Anschluss (1) der Primärwicklung (T11) und/oder
- als eine der Leitungen eine zweite Leitung (W2) von dem zweiten Abschnitt (L12) des Außenleiters zu dem ersten Anschluss (1) der Primärwicklung (T11) und/oder
- als eine der Leitungen eine dritte Leitung (W3) von dem ersten Anschluss (1) der Primärwicklung (T11) zum Neutralleiter (N), und/oder
- als eine der Leitungen eine vierte Leitung (W4) von dem ersten Abschnitt (L11) des Außenleiters zu einem zweiten Anschluss (2) der Primärwicklung (T11) und/oder
- als eine der Leitungen eine fünfte Leitung (W5) von dem zweiten Abschnitt (L12) des Außenleiters zu dem zweiten Anschluss (2) der Primärwicklung (T11) und/oder
- als eine der Leitungen eine sechste Leitung (W6) von dem zweiten Anschluss (2) der Primärwicklung (T11) zum Neutralleiter (N) und/oder
- als eine der Leitungen eine siebte Leitung (W7) von dem ersten Abschnitt (L11) des Außenleiters zu einer Anzapfung (A) der Primärwicklung (T11) und/oder
- als eine der Leitungen eine achte Leitung (W8) von dem zweiten Abschnitt (L12) des Außenleiters zu der Anzapfung (A) der Primärwicklung (T11) und/oder
- als eine der Leitungen eine neunte Leitung (W9) von der Anzapfung der Primärwicklung (T11) zum Neutralleiter (N)
aufweist.

3. Transformatorschaltung nach Anspruch 2, **dadurch gekennzeichnet, dass** die Transformatorschaltung
- als einen der Schalter einen ersten Schalter (S1) in der ersten Leitung (W1) und/oder
- als einen der Schalter einen zweiten Schalter (S2) in der zweiten Leitung (W2) und/oder
- als einen der Schalter einen dritten Schalter (S3) in der dritten Leitung (W3) und/oder
- als einen der Schalter einen vierten Schalter (S4) in der vierten Leitung (W4) und/oder
- als einen der Schalter einen fünften Schalter (S5) in der fünften Leitung (W5) und/oder
- als einen der Schalter einen sechsten Schalter (S6) in der sechsten Leitung (W6) und/oder
- als einen der Schalter einen siebten Schalter (S7) in der siebten Leitung (W7) und/oder
- als einen der Schalter einen achten Schalter (S8) in der achten Leitung (W8) und/oder
- als einen der Schalter einen neunten Schalter (S9) in der neunten Leitung (W9)
aufweist.

4. Transformatorschaltung nach einem der Ansprüche 1 bis 3, **dadurch gekennzeichnet, dass** die Transformatorschaltung ein Mittel zur Erfassung einer Phasenverschiebung zwischen dem Strom (I) im Außenleiter und der Spannung (U1, U2) zwischen dem ersten oder zweiten Abschnitt (L11, L12) des Außenleiters und dem Neutralleiter (N) aufweist.

5. Transformatorschaltung nach Anspruch 4, **dadurch gekennzeichnet, dass** mit dem Mittel zur Erfassung der Phasenverschiebung ein kapazitiver Strom im Außenleiter von einem induktiven oder einem ohmschen Strom im Außenleiter unterscheidbar ist.

6. Transformatorschaltung nach einem der Ansprüche 1 bis 5, **dadurch gekennzeichnet, dass** mittels der Steuerung bei einem kapazitiven Strom im Außenleiter kurz vor einem Nulldurchgang des Stroms im mittels der Steuerung geschalteten und mit der nächstfolgenden Kommutierung den Strom abgebenden Strompfads der zusätzliche Schalter (SZ) zum Einschalten ansteuerbar ist.

7. Transformatorschaltung nach Anspruch 6, **dadurch gekennzeichnet, dass** mittels der Steuerung bei einem kapazitiven Strom im Außenleiter kurz nach oder zusammen mit der Übernahme des Stroms durch einen Strompfad der zusätzliche Schalter (SZ) zum Ausschalten ansteuerbar ist.

8. Transformatorschaltung nach einem der Ansprüche 1 bis 7, **dadurch gekennzeichnet, dass** die Transformatorschaltung die erste Leitung (W1), den ersten Schalter (S1), die dritte Leitung (W3), den dritten Schalter (S3) und die sechste Leitung (W6) umfasst.

9. Transformatorschaltung nach einem der Ansprüche 1 bis 7, **dadurch gekennzeichnet, dass** die Transformatorschaltung die erste Leitung (W1), den ersten Schalter (S1), die siebte Leitung (W7), den siebten Schalter (S7) und die sechste Leitung (W6) umfasst.

10. Transformatorschaltung nach einem der Ansprüche 1 bis 7, **dadurch gekennzeichnet, dass** die Transformatorschaltung die erste Leitung (W1), den ersten Schalter (S1), die dritte Leitung (W3), den dritten Schalter (S3), die sechste Leitung (W6), die siebte Leitung (W7) und den siebten Schalter (S7) umfasst.

11. Transformatorschaltung nach einem der Ansprüche 8 bis 10, **dadurch gekennzeichnet, dass** die Transformatorschaltung zusätzlich die vierte Leitung (W4), den vierten Schalter (S4) und den sechsten Schalter (S6) umfasst.

12. Transformatorschaltung nach Anspruch 11, **dadurch gekennzeichnet,**
- **dass** mittels der Steuerung zur Ansteuerung der antiparallelen unidirektionalen steuerbaren Schaltelementen des zusätzlichen Schalters (SZ) zwei Steuerungssignale erzeugt werden, die ein erstes Muster und ein zweites Muster haben, wobei das zweite Muster invers zum ersten Muster ist,
- **dass** bei einer Phasenverschiebung zwischen dem Strom im Außenleiter und der Spannung zwischen dem ersten oder zweiten Abschnitt (L11, L12) des Außenleiters und dem Neutralleiter (N) zwischen 0° und -90° einerseits ein Signal mit dem ersten Muster ein erstes der beiden Schaltelemente steuert und ein Signal mit dem zweiten Muster ein zweites der beiden Schaltelemente steuert und
- **dass** bei einer Phasenverschiebung zwischen -90° und -180° andererseits die Muster der Signale vertauscht sind.

13. Verfahren zum Betreiben einer Transformatorschaltung nach einem der Ansprüche 1 bis 12, **dadurch gekennzeichnet, dass** die Steuerung bei einem kapazitiven Strom im Außenleiter kurz vor einem Nulldurchgang eines mittels der Steuerung geschalteten und mit der nächsten Kommutierung den Strom abgebenden Strompfads der zusätzliche Schalter (SZ) zum Einschalten angesteuert wird, so dass der magnetische Fluss im magnetischen Kreis aus der Primärwicklung (T11), der Sekundärwicklung (T12) und der zusätzlichen Wicklung (T1Z) ohne sprunghafte Änderung bleibt.
